# EUROPÄISCHE PATENTSCHRIFT

(11) **EP 1 319 463 B1**
(45) Veröffentlichungstag und Bekanntmachung des Hinweises auf die Patenterteilung: **16.07.2008**
(21) Anmeldenummer: 02026694.6
(22) Anmeldetag: 29.11.2002
(51) Int. Cl.: B23P 6/00, B23K 1/00

(54) **Verfahren zum Instandsetzen von verschlissenen oder ausser Mass gefertigten Bauteilen aus Titan**
Method of repairing worn or with incorrect dimensions manufactured articles made in Titan& x9;
Procédé de réparation d'articles en Titane usés ou fabriqués avec des dimensions incorrectes

(30) Priorität: 15.12.2001 DE 10161824
(43) Veröffentlichungstag der Anmeldung: 18.06.2003
(73) Patentinhaber: MTU Aero Engines GmbH, 80995 München (DE)
(72) Erfinder: Eberlein, Armin, 86836 Untermeitingen (DE); Schneider, Albert, 80469 München (DE)

(56) Entgegenhaltungen:
- WO-A-97/21516
- DE-C1- 19 642 980
- GB-A- 1 141 247
- US-A- 4 725 509
- US-A- 5 890 274
- US-A- 5 952 042

## Beschreibung

Die Erfindung betrifft ein Verfahren zum Instandsetzen von verschlissenen oder außer Maß gefertigten Bauteilen aus Titan, insbesondere von Bauteilen, die in einem oder in mehreren Teilbereichen zur formschlüssigen, passgenauen Aufnahme weiterer Bauteile ausgebildet sind (siehe Anspruch 1).

Es ist bekannt, die Fehlstellen von lokal beschädigten oder mit Oberflächenfehlern behafteten Bauteilen dadurch zu beseitigen, dass mittels eines Werkzeuges eine die Fehlstelle ausräumende Vertiefung in das Bauteil eingearbeitet und in diese Vertiefung ein damit korrespondierender Füllkörper eingelötet, und daraufhin die Oberfläche des Füllkörpers an die Oberfläche dieses Bauteiles konturgetreu angeglichen wird; vgl, DE 44 11 680 C1.

Ein hierzu besonders geeigneter Füllkörper ist in der DE 196 22 584 C1 beschrieben und dargestellt.

Die US-A- 5 890 274, die als nächstliegender Stand der Technik angesehen wird, betrifft ein Verfahren zum Instandsetzen von Bauteilen aus Superlegierungen, bei dem ein geometrisch angepasstes, beschichtetes Ersatzteil auf das Bauteil gelötet wird. Das Bauteil wird vor dem Lötprozess nur chemisch gereinigt, eine spanende Bearbeitung ist nicht vorgesehen. Als Anwendungsbeispiele sind insbesondere Verschleißkanten an Schaufeldeckbändern sowie Schaufelspitzen genannt.

Die WO 97/21516 A betrifft ein Verfahren zur Rissbeseitigung an metallischen Bauteilen, insbesondere an Turbinenschaufeln. Die Risse werden durch Materialabtrag in Form von Nuten einfacher Geometrie beseitigt, in die Nuten werden passende Füllkörper eingebracht und befestigt, vorzugsweise durch Löten.

Die DE 196 42 980 C1 schützt ein Verfahren zur Instandsetzung verschlissener Schaufelspitzen von Verdichter- und Turbinenschaufeln. Die Spitzen werden bis zu einer Standard höhe entfernt und durch ein aufgelötetes oder aufgeschweißtes Reparaturteil ersetzt.

Die US-A- 4 725 509 betrifft ein Lotmaterial, das speziell zum Verbinden von Titanbauteilen geeignet ist. Das Material, z.B. in Draht- oder Folienform, weist einen Kern auf Titanbasis, mindestens eine Kupferschicht auf dem Kern und mindestens eine Nickelschicht auf der Kupferschicht auf.

Die GB-A- 1 141 247 schützt eine titanbasierte Lotlegierung mit ca. 15 Gew,-% Kupfer, ca. 15 Gew.-% Nickel und ca. 70 Gew.-% Titan, bevorzugt zur Verbindung von Titanbauteilen.

Durch die vorbekannten Maßnahmen wird der kostenintensive Austausch von an Oberflächen lokal beschädigten Bauteilen durch neue Bauteile vermieden.

Es ist Aufgabe der Erfindung, ausgehend von den bekannten Reparaturverfahren ein Verfahren anzugeben, das speziell für das Instandsetzen von verschlissenen oder außer Maß gefertigten Bauteilen aus Titan, insbesondere von Bauteilen, die in einem oder in mehreren Teilbereichen zur formschlüssigen, passgenauen Aufnahme von weiteren Bauteilen ausgebildet sind, einsetzbar ist.

Diese Aufgabe ist erfindungsgemäß durch die im Anspruch 1 definierten Merkmale und Schritte gelöst:

Gemäß der Erfindung wird der Lötprozess bei einer Temperatur von etwa 980°C durchgeführt, danach schließt sich eine Kriechabkühlung mit max. 5°C pro Minute bis zum Erreichen einer Temperatur von etwa 700°C an. Diese Vorgehensweise ermöglicht eine optimale Verbindung von Bauteil und Ersatzteil bei minimalem Verzug, d.h. bei höchster Passgenauigkeit. Danach erfolgt eine Aushärtung des Bauteils bei ca. 590°C für die Dauer von 8 Stunden zur Wiederherstellung seiner Festigkeitseigenschaften.

Die Vorgabe des Lötmediums kann durch dessen gesondertes Einfügen zwischen Bau- und Ersatzteil oder durch vorheriges Aufbringen auf dem Ersatzteil erfolgen.

Bei Verwendung eines Ersatzteiles mit bereits bearbeiteter Außenkontur entfällt ein anschließendes Bearbeiten.

Es ist vorteilhaft, wenn nach einem weiteren Merkmal der Erfindung der Lötprozess in einem Lötofen unter Vakuum durchgeführt wird.

Die Erwärmung kann aber auch induktiv oder mittels Laserstrahlen oder mit Laserstrahlen und nachfahrender oder auch vorausfahrender Induktionsspule erfolgen, um das zu behandelnde Werkstück vor- oder nachzuwärmen.

Weitere Merkmale der Erfindung ergeben sich aus den Unteransprüchen

Die Erfindung hat den Vorteil, dass verschlissene Bauteile in einen neuwertigen Zustand überführbar und weiter verwendbar sind und damit der Austausch gegen neue Bauteile vermieden wird. Entsprechendes gilt für außer Maß gefertigte Bauteile. Das erfindungsgemäße Verfahren ist besonders vorteilhaft für hochwertige, aus Titan bestehende Bauteile im Triebwerksbau, wo in Teilbereichen mit unterschiedlichen Geometrien und/oder Konturen wie Nuten, Bohrungen, Durchbrüche usw. die Reparatur-/Instandsetzungsarbeiten mit Ringe, Scheiben, Rund-/Vierkantdrähten, Stöpsel, Segmenten, Patches usw. durchzuführen sind. Insbesondere in Teilbereichen, die genaue formschlüssige Verbindungen umfassen - z.B. Gehäusesegmente -, mussten bisher stets neue maßgerechte Bauteile für den Austausch bei Reparaturarbeiten oder bei außer Maß-Fertigung verwendet werden.

Der Lötprozess verändert nicht die Festigkeitseigenschaften des Grundwerkstoffes Ti und/oder deren Legierungen noch wird die Messhaltigkeit der Bauteile unzulässig beeinträchtigt.

So sind bei der Instandsetzung solcher Titan-Bauteile, insbesondere von Bauteilen mit nutenförmigen Teilbereichen die Ersatzteile allein auf die verschlissenen Teilbereiche, z.B. allein auf die Seitenflächen und/oder auf Seiten- und Grundflächen der zum Instandsetzen vorgesehen Nuten abzustimmen unter Berücksichtigung der vorbestimmbaren Lötspalte. Wenn ein Verschleiß der Grundflächen solcher Nuten nicht stattfindet genügen z.B. Ersatzteile allein für die Seitenflächen.

Bei "Reparatur-Löten" anderer Ersatzteilgeometrien ist das erfindungsgemäße Verfahren gemäß den genannten Verfahrensschritten entsprechend anzuwenden.

Das Material des Ersatzteiles ist so zu wählen, dass es dem Grundmaterial, aus dem das reparierende Bauteil besteht, entspricht, also artgleich ist. Es können aber auch Materialien mit besseren Werkstoffeigenschaften, insbesondere verbesserter Verschleißfestigkeit z.B. Stellite verwendet werden. Schließlich ist das Einlöten von z.B. mittels Keramik beschichtetem Material möglich, um z.B. an den betreffenden Positionen des Bauteiles einen verbesserten Wärmeschutz zu erreichen.

Die Erfindung ist nachfolgend anhand eines in der Zeichnung mehr oder minder schematisch dargestellten Gehäusesegmentes eines Gasturbinengehäuses beschrieben.
Es zeigen:
- Fig. 1: die Draufsicht auf einen Abschnitt eines Gehäusesegmentes der Hochdruckverdichterstufe eines Verdichtergehäuses mit einem als Nut ausgebildeten Teilbereich,
- Fig. 2: das Gehäusesegment nach Figur 1 mit einem eingelegten Ringsegment,
- Fig. 3: das Gehäusesegment nach Fig. 2 mit teilweise eingelegter Lötfolie und

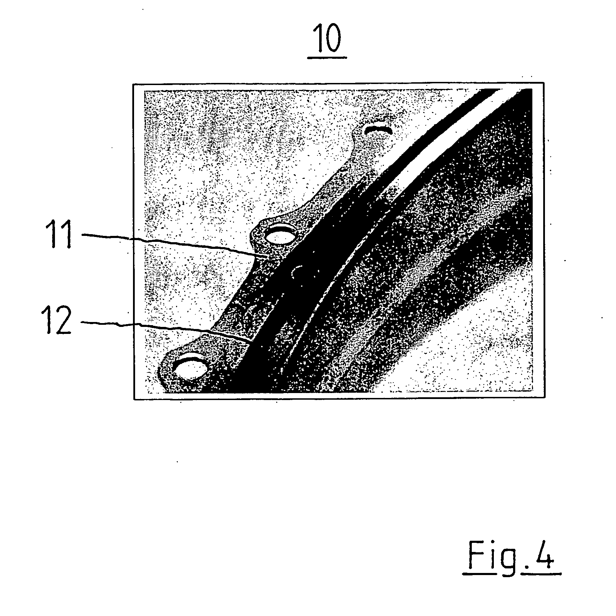

- Fig. 4: das Gehäusesegment nach den Figuren 1 bis 3 nach Instandsetzung.

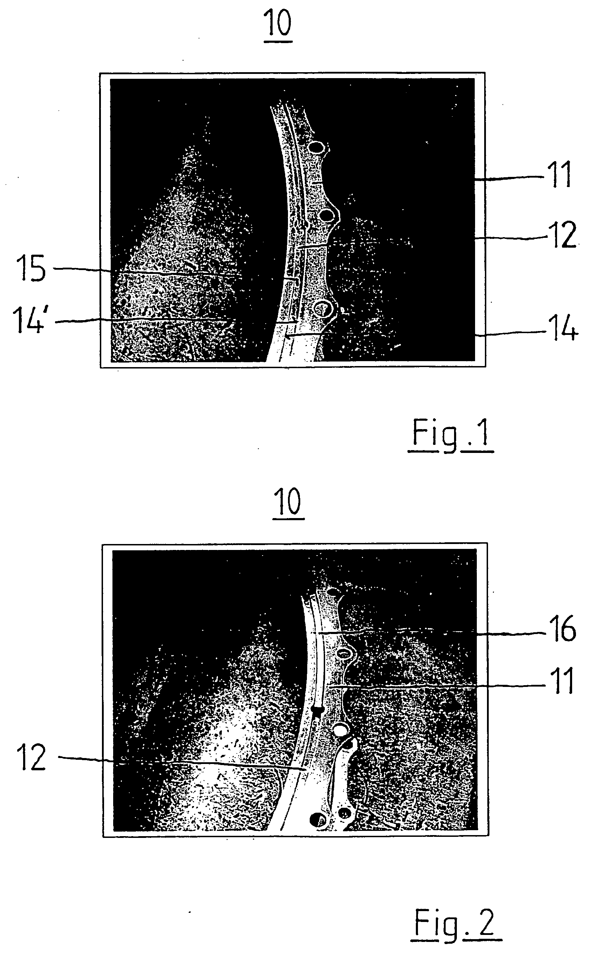

Ein in Fig. 1 nur teilweise dargestelltes Bauteil in Form eines Gehäusesegments 10 einer Hochdruckverdichterstufe weist in seiner flanschartig ausgebildeten Stirnseite 11 eine kreisringförmige Nut 12 auf, zur Aufnahme der korrespondierend geformten Feder eines weiteren entsprechend geformten Gehäusesegments, das mit dieser in die zugeordnete Nut formschlüssig eingreift.

Bei lokalem Verschleiß dieser Nuten oder bei einer außer Maß Fertigung, was nach der Erfahrungen oft nur die Seitenwandungen 14, 14' dieser Nut betrifft, erfolgt deren Reparatur in der Weise, dass der Nut angepasste den Verschleiß oder die außer Maß Fertigung eliminierende als Ersatzteile dienende Ringsegmente 16 gefertigt werden, und zwar aus einem zum Werkstoff des Bauteils 10 gleichen oder artgleichen Werkstoff. Hierbei ist zu berücksichtigen, dass für jedes Ersatzteil Lötmedien in Form von Lötfolien 18 vorzusehen sind, die zwischen die Wandungen 14, nämlich Seitenwandungen 14' und/oder Nutengrund 14" und Ersatzteil 16 einzufügen sind. Bei der Herstellung der Ersatzteile sind also der Aufnahme des jeweiligen Lötmediums dienende vorbestimmte Lötspalte zu berücksichtigen.

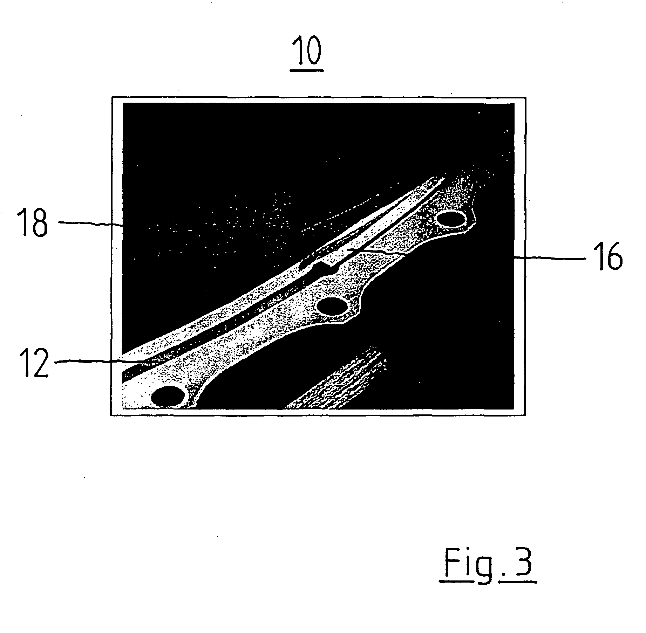

Nach Einlegen der Lötfolien auf dem Nutgrund 15, vgl. Fig. 1, dem Montieren der Ringsegmente 16 und dem Einlegen der Lötfolien zwischen den Seitenwandungen 14, 14' der Nut 12, vgl. Fig. 2 und 3, ist das Bauteil 10 für den durchzuführenden Lötprozess bereit. Ist das zu verwendete Ersatzteil selbst mit einer Lötfolie bedeckt, erübrigt sich das Einlegen einer solchen Lötfolie.

Es können aber auch anders gestaltete Bauteile in der beschriebenen Weise behandelt werden, um betriebsbedingten Verschleiß oder eine außer Maß-Fertigung zu beheben. Die dort betroffenen Bereiche sind ebenfalls entsprechend zu bearbeiten, bis eine einheitliche Breite bzw. eine gewünschte Tiefe zur Aufnahme eines entsprechend geformten Ersatzteils erreicht ist. Eine solche Bearbeitung umfasst ebenfalls die Stärke des oder der jeweiligen Ersatzteile sowie die Stärke des jeweiligen Lötmediums.
Auf die beschriebene Weise lassen sich bauteil- und funktionsabhängiger Verschleiß z.B. von 0,50 mm Tiefe je Wandung einer Nut beheben. Dies gilt auch für außer Maß gearbeitete Bauteile. Bei der Vorbereitung für das Löten ist darauf zu achten, dass die einzelnen Teile, nämlich das Ersatzteil und das Lötmedium sauber ohne Spalt aneinander gefügt sind.

An den Außenkanten kann zusätzlich Lötpaste aufgetragen werden, um einen Einfall der Lötnaht entgegen zu wirken.

Der Lötprozess für Bau- und Ersatzteil aus Titan Ti6242 erfolgt gemäß der Erfindung in einem Lötofen unter Vakuum (z.B. 1x10⁻⁴ bar) bei einer Temperatur von etwa +980°C. An den Lötvorgang schließt sich eine Kriechabkühlung mit 5°C Max. pro Minute an, die bis zum Erreichen von einer Temperatur von ca. +700°C durchzuführen ist. Daran anschließend erfolgt ein Aushärten des Bauteils 10 bei einer Temperatur von ca. +590°C für die Dauer von 8 Stunden. Durch diesen Vorgang wird eine Verringerung der Festigkeitseigenschaften des Bauteils 10 infolge des durchgeführten Lötvorganges wieder weitestgehend behoben.

Um einen Verzug des Bauteils 10 während des Lötprozesses zu verhindern ist dieses während des Lötvorganges im Lötofen eben aufzuspannen. Während der anschließenden Abkühlung ist, um ein Verziehen des Bauteils 10 zu verhindern, ein gleichmäßiges Anblasen des Bauteils 10 - zum Beispiel mit Argon - durchzuführen.

Wenn die Konfiguration oder Art der zu behandelnden Bauteile eine örtliche Wärmeeinbringung erfordert kann dies auch gemäß der Erfindung mittels einer Induktionsspule erfolgen, die den gesamten Lötbereich abdeckt.

Auch ist die notwendige Wärmeeinbringung mit Laserstrahlen gemäß der Erfindung möglich. Diese Wärmeeinbringung kann auch in Verbindung mit einer "nachfahrenden" oder "vorausfahrenden" Induktionsspule kombiniert werden. Dies hat den Vorteil, dass eine rasche Abkühlung des Lötbereichs vermieden wird, bzw. dass das zu behandelnde Bauteil vorgewärmt wird.

Um der Gefahr von Verzug, insbesondere bei einer Schnellabkühlung entgegen zu wirken, ist für den Lötprozess gemäß der Erfindung eine im Lötofen (5°C pro Minute von 980°C bis 700°C) integrierte Kriechabkühlung vorgesehen.

Als Lötmedium sind Lötfolien (vorzugsweise 0,07 mm Dicke) oder Lötpasten geeignet, wobei ein Lötspalt entsprechend der Lötfoliendichte einzuhalten ist. Als Lötmedium ist das handelsübliche Lot MTS 14 10 - TiCuNi Wesgo(70 Ti-15Cu-15Ni) bzw. das neu definierte Lot MTS 1473-1 (60Ti-15Cu-25Ni) - zu verwenden.

Nach dem Einlöten der Ringsegmente erfolgt die sich anschließende Sollmaß-Fertigung mittels der üblichen Fertigungsmittel. Eine solche Sollmessfertigung entfällt, wenn das anzuwendende Ersatzteil in Voraus auf Endkontur bearbeitet werden kann.

Die Erfindung ist auf die dargestellte und beschriebene Konfiguration der Ersatzteile nicht beschränkt, es sind auch Ring-, Vierkant-, Segment-, Patch- und andere Formen je nach Konfiguration der Bauteile möglich, deren Verschleiß oder deren außer Maß Fertigung durch das erfindungsgemäße hier mit Patschlöten bezeichnetes Verfahren zu beheben ist.

## Patentansprüche

1. Verfahren zum Instandsetzen von verschlissenen oder außer Maß gefertigten Bauteilen (10) aus Titan, insbesondere von Bauteilen (10), die in einem oder in mehreren Teilbereichen (12) zur formschlüssigen, passgenauen Aufnahme weiterer Bauteile ausgebildet sind, mit folgenden Verfahrensschritten:
- Maßgenaues Bearbeiten der betroffenen Bereiche (12) des oder der verschlissenen oder außer Maß gefertigten Bauteile (10) bis zum Erreichen eines vorbestimmten Maßes,
- Herstellen eines oder mehrerer mit den jeweils bearbeiteten Bereichen (12) des oder der Bauteile (10) korrespondierender Ersatzteile (16) gleicher Geometrie abzüglich eines vorbestimmten Lötspaltes aus einem Werkstoff, der dem Werkstoff, aus dem das Bauteil (10) gefertigt ist, artgleich ist mit gleichen oder verbesserten Werkstoffeigenschaften,
- Vorgabe eines Lötmediums (18) vorbestimmter Stärke zwischen den bearbeiteten Bereichen(12) des oder der Bauteile (10) und des oder der hergestellten Ersatzteile (16),
- Durchführung eines Lötprozesses zwecks Verbindung von Ersatzteil (16) und Bauteil (10), und
- gegebenenfalls anschließendes maßgenaues Bearbeiten der betroffenen Bereiche (12) des Bauteils (10),
wobei der Lötprozess bei einer Temperatur von etwa 980 °C durchgeführt wird, und dass sich an diesen eine Kriechabkühlung mit max. 5 °C pro Minute bis zum Erreichen einer Temperatur von etwa 700 °C anschließt, sowie eine nachfolgende Aushärtung des Bauteils (10) bei ca 590°C für die Dauer von 8 Stunden erfolgt.

2. Verfahren nach Anspruch 1, **dadurch gekennzeichnet, dass** der Lötprozess in einem Lötofen unter Vakuum durchgeführt wird.

3. Verfahren nach Anspruch 2, **dadurch gekennzeichnet, dass** das Bauteil (10) während seiner Abkühlung mit einem Argongas gleichmäßig angeblasen wird.

4. Verfahren nach Anspruch 2 oder 3, **dadurch gekennzeichnet, dass** die Auf nahme des Bauteils (10) in dem Lötofen eben aufgespannt erfolgt.

5. Verfahren nach einem der Ansprüche 1 bis 4, **dadurch gekennzeichnet, dass** als Lötmedium Lötfolie (18), z.B. 0,07 mm dick, für eine Lötspaltbreite von 0,08 bis 0,13 mm je Seite verwendet wird.

6. Verfahren nach Anspruch 1, **dadurch gekennzeichnet, dass** der Lötprozess mittels einer den Lötbereich abdeckenden Induktionsspule durchgeführt wird.

7. Verfahren nach Anspruch 6, **dadurch gekennzeichnet, dass** der Lötprozess mittels Laserstrahlhartlöten erfolgt, bei dem eine nachfahrende und/oder vorausfahrende Induktionserwärmung zugeordnet ist.

8. Verfahren nach einem der vorhergehenden Ansprüche, **dadurch gekennzeichnet, dass** die instandzusetzenden, konturierten Bereiche als Bohrungen, Durchbrüche oder Nuten (12) ausgebildet sind, denen entsprechend ausgebildete Ersatzteile(16) zugeordnet sind, z.B. in Form von Ringen, Scheiben, Rund-/Vierkantdrähten, Stöpseln, Segmenten oder Patches.

## Claims

1. A method for repairing components (10) made from titanium that are worn or manufactured with incorrect dimensions, in particular components (10) that are formed in one or more partial regions (12) to receive further components in a form-locking manner with accuracy of fit, having the following method steps:
- dimensionally accurate processing of the affected regions (12) of the component or components (10) that is/are worn or manufactured with incorrect dimensions until a predetermined dimension is achieved,
- production of one or more replacement parts (16) that correspond with the respectively processed regions (12) of the component or components (10) and are of the same geometry minus a predetermined soldering gap from a material that is of the same type as the material from which the component (10) is manufactured and has the same or improved material properties,
- input of a soldering medium (18) of predetermined thickness between the processed regions (12) of the component or components (10) and of the replacement part or parts (16) produced,
- carrying out of a soldering process for the purpose of connecting the replacement part (16) and the component (10), and
- if applicable, subsequent dimensionally accurate processing of the affected regions (12) of the component (10),
wherein the soldering process is carried out at a temperature of approximately 980°C, and creep cooling follows this at a maximum of 5°C per minute until a temperature of approximately 700°C is reached, and subsequent hardening of the component (10) is also effected at about 590°C for a period of 8 hours.

2. A method according to claim 1, **characterised in that** the soldering process is carried out in a soldering furnace under vacuum.

3. A method according to claim 2, **characterised in that** an argon gas is uniformly blown onto the component (10) during its cooling.

4. A method according to claim 2 or 3, **characterised in that** the component (10) is received in the soldering furnace whilst being clamped in a planar manner.

5. A method according to one of claims 1 to 4, **characterised in that** soldering foil (18), which is 0.07 mm thick for example, is used as a soldering medium for a soldering-gap width of 0.08 to 0.13 mm per side.

6. A method according to claim 1, **characterised in that** the soldering process is carried out by means of an induction coil covering the soldering region.

7. A method according to claim 6, **characterised in that** the soldering process is effected by means of laser-beam hard-soldering, with coordinated subsequent and/or preceding induction heating.

8. A method according to one of the preceding claims, **characterised in that** the contoured regions that are to be repaired are formed as bores, openings or grooves (12), with which correspondingly formed replacement parts (16) are associated, for example in the form of rings, discs, round/square wires, stoppers, segments or patches.

## Revendications

1. Procédé de réparation de pièces (10) usées ou fabriquées hors cotes en titane, en particulier de pièces (10) conçues pour le logement avec ajustement de précision par complémentarité de forme d'autres pièces dans une ou plusieurs zones partielles (12), comportant les étapes de procédé suivantes :
- usinage avec précision de cotes des zones (12) concernées de la ou des pièces (10) usées ou fabriquées hors cotes jusqu'à l'obtention d'une cote prédéfinie,
- fabrication d'une ou de plusieurs pièces de rechange (16) correspondant aux zones (12) respectivement usinées de la pièce ou des pièces (10), présentant une géométrie identique, déduction faite d'une fente de brasage prédéfinie, dans un matériau de type identique au matériau dans lequel la pièce (10) est fabriquée, avec des propriétés matérielles équivalentes ou optimisées.
- apport d'un agent de brasage (18) d'épaisseur prédéfinie entre les zones (12) usinées de la ou des pièces (10) et de la ou des pièces de rechange (16) fabriquées,
- exécution d'un processus de brasage pour l'assemblage de la pièce de rechange (16) avec la pièce (10), et
- le cas échéant, usinage consécutif avec précision de cotes des zones (12) concernées de la pièce (10),
où le processus de brasage est exécuté à une température de quelque 980 °C, est suivi d'un refroidissement de fluage de 5 °C au maximum par minute jusqu'à une température de quelque 700 °C, puis par un durcissement consécutif de la pièce (10) à quelque 590 °C pendant une durée de 8 heures.

2. Procédé selon la revendication 1, **caractérisé en ce que** le processus de brasage est exécuté dans un four à brasage sous vide.

3. Procédé selon la revendication 2, **caractérisé en ce qu'**un gaz argon est régulièrement soufflé sur la pièce (10) pendant le refroidissement de celle-ci.

4. Procédé selon la revendication 2 ou 3, **caractérisé en ce que** l'attachement de la pièce (10) est serré de manière plane dans le four à brasage.

5. Procédé selon l'une des revendications 1 à 4, **caractérisé en ce qu'**une feuille à braser (18), épaisse p. ex. de 0,07 mm, est utilisée comme agent de brasage, pour une largeur de fente de brasage comprise entre 0,08 et 0,13 mm par côté.

6. Procédé selon la revendication 1, **caractérisé en ce que** le processus de brasage est exécuté au moyen d'une bobine d'induction couvrant la zone de brasage.

7. Procédé selon la revendication 6, **caractérisé en ce que** le processus de brasage est exécuté par brasage fort à faisceau laser, auquel est associé un chauffage par induction en aval et/ou en amont.

8. Procédé selon l'une des revendications précédentes, **caractérisé en ce que** les zones à réparer pourvues de contours sont formées comme alésages, traversées ou rainures (12) auxquels sont associées des pièces de rechange (16) de formes correspondantes, telles qu'anneaux, disques, fils de section cylindrique/carrée, bouchons, segments ou patches.
